# FASCICULE DE BREVET EUROPEEN

(11) **EP 3 969 295 B1**
(45) Date de publication et mention de la délivrance du brevet: **11.10.2023**
(21) Numéro de dépôt: 20723817.1
(22) Date de dépôt: 29.04.2020
(51) Int. Cl.: B60C 11/12

(54) **BANDE DE ROULEMENT DE PNEUMATIQUE POUR VEHICULE LOURD DE TYPE GENIE CIVIL**
REIFENLAUFFLÄCHE FÜR SCHWERLASTFAHRZEUG VOM BAUMASCHINENTYP
TYRE TREAD FOR A HEAVY-DUTY VEHICLE OF CONSTRUCTION PLANT TYPE

(30) Priorité: 16.05.2019 FR 1905097
(43) Date de publication de la demande: 23.03.2022
(73) Titulaire: Compagnie Générale des Etablissements Michelin, 63000 Clermont-Ferrand (FR)
(72) Inventeur: SPINNLER, Olivier, 63040 CLERMONT-FERRAND Cedex 9 (FR); VILLA-RECIO, Alvaro, 63040 CLERMONT-FERRAND Cedex 9 (FR)
(74) Mandataire: Millanvois, Patrick Jacques Jean
(86) Numéro de dépôt international: PCT/EP2020/061860
(87) Numéro de publication internationale: WO 2020/229176

(56) Documents cités:
- EP-A1- 2 492 117
- FR-A1- 3 058 927
- JP-A- H06 143 943

## Description

La présente invention a pour objet une bande de roulement de pneumatique pour véhicule lourd de type génie civil destiné à porter de lourdes charges et à rouler sur des sols irréguliers et agressifs tels que, par exemple, ceux des mines.

Une bande de roulement comprenant au moins un matériau à base de caoutchouc est destinée à constituer la partie périphérique du pneumatique et à être usée lors de son entrée en contact avec un sol par l'intermédiaire d'une surface de roulement.

Une bande de roulement peut être définie géométriquement par une surface moyenne et trois dimensions : une dimension perpendiculaire à la surface moyenne, appelée épaisseur, une plus petite dimension selon la surface moyenne, appelée largeur, et une plus grande dimension selon la surface moyenne, appelée longueur.

Dans le présent document, on désigne par:
- direction radiale : une direction selon l'épaisseur de la bande de roulement, perpendiculaire à sa surface moyenne, correspondant à une direction perpendiculaire à l'axe de rotation du pneumatique.
- direction transversale : une direction selon la largeur de la bande de roulement, correspondant à la direction parallèle à l'axe de rotation du pneumatique.
- direction longitudinale: une direction selon la longueur de la bande de roulement, correspondant à une direction circonférentielle tangente à la périphérie du pneumatique et perpendiculaire aux directions respectivement radiale et transversale.
- plan médian longitudinal: un plan contenant la direction radiale et la direction longitudinale, perpendiculaire à la surface moyenne et divisant la bande de roulement dans sa largeur en deux portions égales.

Pour assurer une performance satisfaisante en adhérence longitudinale, sous couple moteur et sous couple freineur, et en adhérence transversale, il est nécessaire de former, dans la bande de roulement, une sculpture qui est un système de découpures séparant des éléments en relief.

Une découpure est un espace délimité par des parois de matière se faisant face et distantes l'une de l'autre d'une distance définissant la largeur E de la découpure, et s'étendant à partir de la surface de roulement, selon la direction radiale, sur une profondeur H. Selon la valeur de sa largeur E, une découpure est soit une incision, soit une rainure. Dans le cas d'une incision, cette largeur E est appropriée pour permettre la mise en contact au moins partielle des parois opposées délimitant ladite incision au moins lors du passage de la bande de roulement dans le contact avec le sol, lorsque le pneumatique est soumis à des conditions de charge et de pression nominales recommandées, par exemple, par la norme E.T.R.T.O. (European Tyre and Rim Technical Organization). Dans le cas d'une rainure, les parois de cette rainure n'entrent généralement pas en contact l'une avec l'autre dans des conditions nominales recommandées de roulage.

Les découpures délimitent des éléments en relief de type blocs ou de type nervures. Un bloc comprend une face de contact, contenue dans la surface de roulement, et au moins trois faces latérales, coupant la surface de roulement. Une nervure comprend une face de contact et deux faces latérales s'étendant, selon la direction longitudinale, sur toute la longueur de la bande de roulement. Une nervure est ainsi délimitée, selon la direction transversale, par une ou deux découpures longitudinales appelées également sillons longitudinaux.

La bande de roulement comprend ainsi généralement des découpures réparties en sillons longitudinaux, en rainures transversales et en incisions transversales. Un sillon longitudinal est un sillon dont le profil moyen forme, avec la direction longitudinale, un angle au plus égal à 45°, c'est-à-dire un sillon dont le profil moyen a une direction globalement longitudinale avec une inclinaison moyenne plus proche de la direction longitudinale que de la direction transversale. Une rainure transversale ou une incision transversale est une découpure dont le profil moyen forme, avec la direction longitudinale, un angle au moins égal à 45°, c'est-à-dire une découpure dont le profil moyen a une direction globalement transversale avec une inclinaison moyenne plus proche de la direction transversale que de la direction longitudinale. Ainsi une découpure ou une incision transversale peut être strictement transversale, avec un profil moyen formant, avec la direction longitudinale, un angle égal à 90°, ou sensiblement oblique, avec un profil moyen formant, avec la direction longitudinale, un angle strictement inférieur à 90°.

La bande de roulement, intégrée au pneumatique, est le plus souvent caractérisée géométriquement par une largeur transversale W_{T}, selon la direction transversale, et une épaisseur radiale H_{T}, selon une direction radiale. La largeur transversale W_{T} est définie comme la largeur transversale de la surface de roulement qui est la surface de contact de la bande de roulement du pneumatique neuf avec un sol lisse, le pneumatique étant soumis à des conditions de pression et de charge recommandées. L'épaisseur radiale H_{T} est définie, par convention, comme la profondeur radiale maximale mesurée dans les découpures, le plus souvent dans les sillons longitudinaux. Dans le cas d'un pneumatique pour véhicule lourd de type génie civil, et à titre d'exemple, la largeur transversale W_{T} est au moins égale à 600 mm et l'épaisseur radiale H_{T} est au moins égale à 60 mm, voire 70 mm.

Les conditions usuelles de roulage, en termes de pression, de charge et de vitesse, d'un pneumatique pour véhicule lourd de type génie civil, tel que, par exemple, un dumper destiné au transport de matériaux extraits de carrières ou de mines de surface, sont particulièrement sévères. A titre d'exemple, sur les sites d'extraction de matériaux, tels que des minerais ou du charbon, l'usage d'un véhicule de type dumper consiste, de manière simplifiée, en une alternance de cycles aller en charge et de cycles retour à vide. Lors d'un cycle aller en charge, le véhicule chargé transporte, principalement en montée, les matériaux extraits depuis des zones de chargement au fond de la mine, ou fond du « pit », jusqu'à des zones de déchargement : ce qui nécessite une bonne adhérence en motricité des pneumatiques. Lors d'un cycle retour à vide, le véhicule à vide retourne, principalement en descente, vers les zones de chargement au fond de la mine : ce qui nécessite une bonne adhérence en freinage des pneumatiques. Les pistes le plus souvent en pente sont également souvent virageuses, ce qui nécessite une bonne adhérence transversale des pneumatiques. En outre les pistes sur lesquelles roulent les véhicules sont constituées de matériaux en général issus de la mine, par exemple, des roches concassées, compactées et régulièrement arrosées pour garantir la tenue de la couche d'usure de la piste lors du passage des véhicules et sont souvent recouvertes de boue et d'eau : ce qui nécessite une évacuation de ce mélange de boue et d'eau par la bande de roulement, pour garantir une adhérence satisfaisante sur sol boueux.

Pour prendre en compte les contraintes d'usage précédemment décrites, il a été proposé dans le document EP 2736735 une bande de roulement pour pneumatique de génie civil comprenant une partie centrale de largeur comprise entre 40 % et 60 % de la largeur totale de la bande roulement et des parties de bord de part et d'autre de cette partie centrale. La partie centrale est pourvue d'une pluralité d'incisions d'orientation générale transversale aptes à se fermer au passage dans le contact. Chaque partie de bord comprend une pluralité de rainures d'orientation générale transversale délimitant une pluralité d'éléments de relief, le nombre d'éléments de relief de chaque partie de bord étant égal au nombre d'éléments de relief de la partie centrale, ce nombre d'éléments étant au moins égal à 39 et au plus égal à 49. Cette bande de roulement a un taux global de creux ou taux d'entaillement volumique au plus égal à 20%, le taux d'entaillement volumique étant défini comme le rapport entre le volume total des découpures, mesuré sur le pneumatique libre c'est-à-dire non monté et non gonflé, et la somme du volume total des découpures et du volume total des éléments en relief délimités par ces découpures. En résumé, ce document décrit essentiellement une bande de roulement avec des incisions transversales comprises dans une partie centrale.

Pour améliorer encore la performance en usure tout en conservant une adhérence appropriée et cela quel que soit l'état d'usure de la bande de roulement, le document EP 3160773 décrit une bande de roulement pour pneumatique de génie civil pourvue d'au moins deux découpures d'orientation générale circonférentielle et de profondeur moyenne au moins égale à 70 mm et au plus égale à l'épaisseur de matière à user. Ces découpures circonférentielles divisent la bande de roulement en une région médiane ayant une largeur axiale au moins égale à 50% et au plus égale à 80% de la largeur totale de la bande de roulement, et des régions d'épaule délimitant axialement la bande de roulement. La région médiane comprend une pluralité d'incisions transversales ou obliques s'ouvrant dans les découpures circonférentielles, ces incisions transversales ou obliques se fermant au moins en partie lors du passage dans le contact et ayant une profondeur au moins égale à 75% de la profondeur des découpures circonférentielles. Ces incisions transversales ou obliques délimitent une pluralité d'éléments de matière de hauteur égale à la profondeur moyenne H desdites incisions et de longueur circonférentielle B égale à la distance moyenne entre deux incisions transversales ou obliques. Cette bande de roulement est telle que, pour tous les éléments de matière délimités par deux incisions consécutives dans la région médiane, le rapport H/B est plus grand que 0.5 et au plus égal à 2.5. Ainsi ce document décrit une bande de roulement avec une forte densité d'incisions transversales.

Enfin le document WO 2017162953 décrit une bande de roulement pour pneu de véhicule hors la route, ayant une largeur totale supérieure à 600 mm. Cette bande de roulement est pourvue d'au moins trois rainures principales d'orientation générale circonférentielle et de profondeur au moins égale à 60 mm, divisant la bande de roulement en nervures intermédiaires et en nervures de bord. Les nervures de bord ont une largeur au plus égale au quart de la largeur totale de la bande, et au moins une partie des nervures intermédiaires sont pourvues d'une pluralité de rainures fines ayant une profondeur H1, délimitant des lames de matière de largeur moyenne B1 inférieure à deux fois la profondeur H1 et orientées dans la direction transversale. Cette bande de roulement est telle que chaque nervure intermédiaire a une largeur moyenne qui est au plus égale au quart de la largeur totale et est au moins égale à 0.75 fois l'épaisseur de matière à user, et est telle que les rainures fines ont, sur une hauteur au moins égale à 65% de leur profondeur totale H1, une largeur qui est au plus égale à la valeur obtenue à partir de l'expression mathématique suivante : 0.04√(B1.H1). Ce document décrit de façon encore plus précise une bande de roulement incisée avec des caractéristiques optimisées des incisions. Les documents FR 3058927A1, JP H06143943A et EP 2492117A1 sont également des documents pertinents de l'état de la technique.

Pour un pneumatique monté sur un essieu moteur d'un véhicule de génie civil, soumis à un couple moteur ou freineur, et comprenant une bande de roulement comprenant des incisions transversales, on constate fréquemment, en fond d'incisions, l'apparition de fissures qui peuvent provoquer un arrachement total ou partiel des éléments en relief.

Les inventeurs se sont donnés pour objectif de diminuer le risque de fissuration en fond d'incision, sans réduire significativement le volume de matière de la bande de roulement pour ne pas diminuer la durée de vie du pneumatique vis-à-vis de l'usure.

Cet objectif a été atteint par une bande de roulement de pneumatique pour véhicule lourd de type génie civil destinée à entrer en contact avec un sol par l'intermédiaire d'une surface de roulement, ayant une épaisseur radiale H_{T} et comprenant des découpures délimitant des éléments en relief,
- les découpures étant, selon une direction longitudinale, des sillons longitudinaux, ou, selon une direction transversale, des rainures transversales ou des incisions transversales,
- toute incision transversale étant délimitée par deux parois, destinées à entrer en contact l'une avec l'autre lorsque la surface de roulement entre en contact avec un sol au cours du roulage du pneumatique,
- toute incision transversale ayant une profondeur H, mesurée radialement vers l'intérieur à partir de la surface de roulement, au plus égale à l'épaisseur radiale H_{T}, et une largeur E, mesurée perpendiculairement aux deux parois délimitant ladite incision transversale et correspondant à la distance minimale entre les deux parois,
- toute incision transversale ayant une extrémité radialement intérieure constituée par un renflement ayant un rayon de fond R,
- les incisions transversales étant réparties longitudinalement selon un pas longitudinal B,
- la profondeur H, la largeur E de toute incision transversale, le rayon de fond R du renflement et le pas longitudinal B vérifiant la relation (R*B)/(E*H)>=1.8.

Le critère (R*B)/(E*H) caractérisant l'invention peut également s'exprimer sous la forme (R/E)/ (H/B), dans laquelle, selon un point de vue géométrique, le rapport R/E caractérise la résistance à la fissuration de l'incision et le rapport H/B caractérise la souplesse longitudinale de l'élément en relief vis-à-vis du cisaillement. Pour une largeur E donnée d'incision transversale, plus le rayon de fond R du renflement est grand, plus le fond de l'incision est résistant à la fissuration. Pour un pas longitudinal B donné de la répartition des incisions, plus la profondeur H de l'incision, c'est-à-dire la hauteur de l'élément en relief, est élevée, plus l'élément en relief est souple. Le critère de l'invention exprime donc une relation entre les deux descripteurs R/E et H/B, caractéristiques respectivement de la résistance à la fissuration des fonds d'incision et de la capacité de déformation en cisaillement des éléments en relief délimités longitudinalement par deux incisions.

Avantageusement l'épaisseur radiale H_{T} de la bande de roulement est au moins égale à 60 mm. Plus la bande de roulement est épaisse, plus elle protège efficacement l'armature de sommet du pneumatique vis-à-vis des agressions mécaniques.

Encore avantageusement la largeur E de toute incision transversale est au moins égale à 1 mm et au plus égale à 20% de l'épaisseur radiale H_{T}. En dessous d'une largeur E d'incision égale à 1 mm, les éléments en relief adjacents à l'incision ne peuvent plus se déformer localement, sous l'action d'un indenteur de la bande de roulement, ce qui est susceptible d'accentuer l'usure locale. Au-delà d'une largeur E d'incision égale à 20% de l'épaisseur radiale H_{T} de la bande de roulement, les parois de l'incision ne peuvent plus entrer en contact l'une avec l'autre, lors du passage de la surface de roulement dans l'aire de contact, et donc garantir la rigidité recherchée pour limiter l'usure en entrée et en sortie de l'aire de contact.

Préférentiellement le rayon de fond R du renflement est au moins égal à 2 fois la largeur E de l'incision transversale. Plus le rapport R/E est élevé, meilleure est la résistance du fond de l'incision à la fissuration.

Selon un mode de réalisation avantageux du fond d'incision, tout renflement est un cylindre de rayon R. Le cylindre permet en effet un compromis optimal entre le volume du renflement et l'évolution du rayon de courbure le long du renflement.

Dans un mode de répartition avantageux, les incisions transversales sont réparties longitudinalement selon un pas B, tel que leur profondeur H est au moins égale à 0.5 fois le pas B, de préférence au moins égale au pas B. L'usure est d'autant plus limitée que l'élancement longitudinal H/B de l'élément en relief est élevé.

Selon un mode de réalisation particulier, les profondeurs H de deux incisions transversales consécutives sont différentes. Grâce à cette variabilité de profondeur d'incision, les fissures initiées en fond de deux incisions consécutives se propagent dans des plans différents et ne se rejoignent pas. Ainsi il ne peut y avoir un plan unique de fissuration reliant la base de plusieurs éléments en relief consécutifs, ce qui permet d'éviter l'arrachement de ces éléments en relief. Par conséquent cette conception permet de rendre la bande de roulement plus robuste vis-à-vis des sollicitations mécaniques sévères (passage de couple, roulage en dérive).

Selon une variante préférée du mode de réalisation particulier précédent, la profondeur H prend alternativement deux valeurs distinctes H1 et H2 pour deux incisions transversales consécutives.

Dans une première configuration d'incision, toute incision transversale a une surface moyenne ondulée selon une direction radiale et/ou selon la direction transversale. Une surface moyenne ondulée de l'incision transversale permet un blocage en cisaillement des parois de l'incision, ce qui augmente les rigidités des éléments en relief adjacents à l'incision et diminue leur glissement sur le sol, ce qui limite l'usure.

L'ensemble des découpures ayant un volume total Vc et l'ensemble des renflements des incisions transversales ayant un volume total Vi, le volume total V_{I} des renflements des incisions transversales est avantageusement au plus égal à 10% du volume total Vc des découpures. Cette condition permet de limiter l'impact de la présence desdits renflements sur le volume de gomme à user, ce qui garantit une durée de vie satisfaisante vis-à-vis de l'usure.

Avantageusement la bande de roulement comprend au moins deux sillons longitudinaux. La présence de ces sillons longitudinaux permet une ventilation de la bande de roulement et, par conséquent, une meilleure maîtrise de son évolution thermique.

L'invention a également pour objet un pneumatique pour véhicule lourd de type génie civil comprenant une bande de roulement selon l'un quelconque des modes de réalisation précédemment décrits. Les caractéristiques des incisions transversales H, E, R et B de la bande de roulement sont mesurées sur un pneumatique à l'état libre, c'est-à-dire non monté sur sa jante et non gonflé.

Les caractéristiques de l'invention sont illustrées par les figures 1 à 8 schématiques et non représentées à l'échelle:
- Figure 1: Vue de dessus d'une bande de roulement selon l'invention,
- Figure 2: Vue en coupe, selon un plan longitudinal, d'une bande de roulement selon l'invention,
- Figure 3: Vue de détail en coupe, selon un plan longitudinal, d'une incision transversale avec un renflement en fond d'incision,
- Figure 4: Vue de détail en coupe, selon un plan longitudinal, d'une incision transversale avec un renflement en fond d'incision et un élargissement en surface,
- Figure 5: Vue en coupe, selon un plan longitudinal, d'une bande de roulement selon l'invention comprenant une succession d'incisions transversales avec des profondeurs alternées,
- Figure 6: Vue de détail en coupe, selon un plan longitudinal, d'une incision transversale ondulée,
- Figure 7: Principe de fonctionnement mécanique d'une incision transversale, sous l'action d'un effort de cisaillement,
- Figure 8: Courbes représentant le cisaillement maximal (ou glissement de contrainte) Tₘₐₓ en fond d'incision en fonction de l'effort de traction Fx à transmettre par le pneumatique.

### [Fig 1]

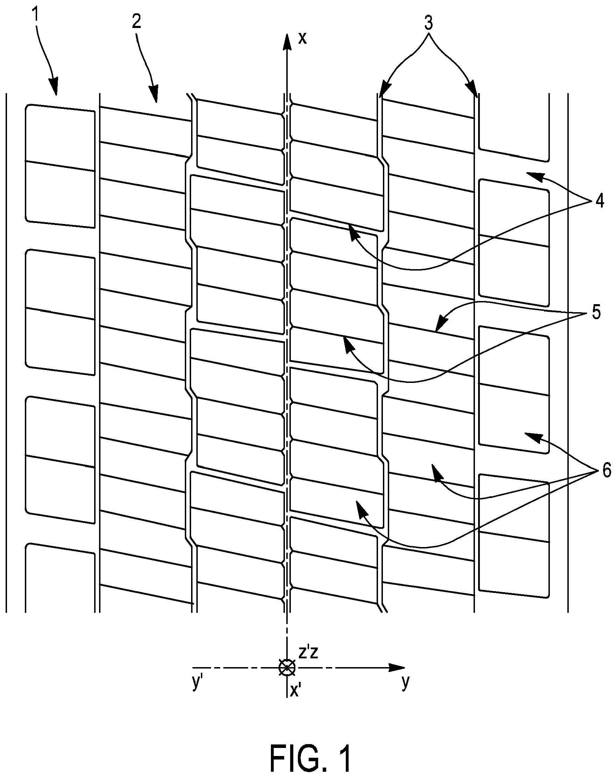

La figure 1 est une vue de dessus d'une bande de roulement selon l'invention. La bande de roulement 1, destinée à entrer en contact avec un sol par l'intermédiaire d'une surface de roulement 2, comprend des découpures (3, 4, 5) délimitant des éléments en relief 6. Les découpures (3, 4, 5) sont, selon une direction longitudinale XX', des sillons longitudinaux 3, ou, selon une direction transversale YY', des rainures transversales 4 ou des incisions transversales 5.

### [Fig 2]

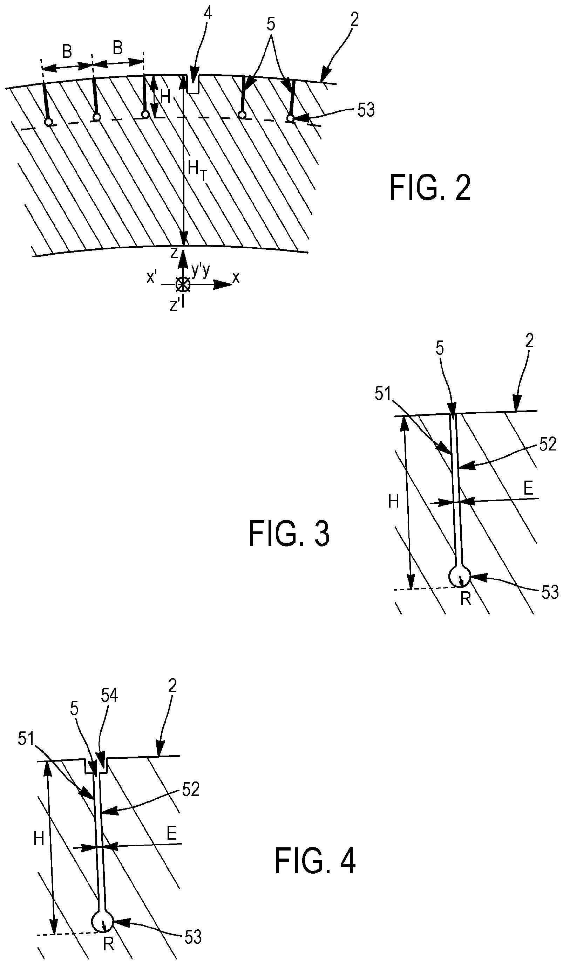

La figure 2 est une vue en coupe, selon un plan longitudinal XZ, d'une bande de roulement selon l'invention. Dans la bande de roulement d'épaisseur radiale H_{T}, toute incision transversale 5 a une profondeur H, mesurée radialement vers l'intérieur à partir de la surface de roulement 2, au plus égale à l'épaisseur radiale H_{T}, et comprend une extrémité radialement intérieure constituée par un renflement 53. Les incisions transversales 5 sont réparties longitudinalement selon un pas longitudinal B. Dans l'exemple présenté, la bande de roulement comprend en outre périodiquement une rainure transversale 4 positionnée longitudinalement entre deux incisions transversales 5, ce qui crée localement un plus grand pas entre les deux incisions transversales concernées.

### [Fig 3]

La figure 3 est une vue de détail en coupe, selon un plan longitudinal, d'une incision transversale avec un renflement en fond d'incision. L'incision transversale 5 a une profondeur H, mesurée radialement vers l'intérieur à partir de la surface de roulement 2, au plus égale à l'épaisseur radiale H_{T}, et une largeur E, mesurée perpendiculairement aux deux parois (51, 52) délimitant ladite incision transversale 5 et correspondant à la distance minimale entre les deux parois. En outre, elle a une extrémité radialement intérieure constituée par un renflement 53 ayant un rayon de fond R.

### [Fig 4]

La figure 4 est une vue de détail en coupe, selon un plan longitudinal XZ, d'une incision transversale avec un renflement en fond d'incision et un élargissement en surface. Elle diffère de la figure 3 par la présence d'un élargissement 54 de l'incision au niveau de la surface de roulement 2, sur une hauteur radiale limitée. L'épaisseur E de l'incision n'est pas mesurée au niveau de l'élargissement, à l'extrémité radialement extérieure, ni au niveau du renflement, à l'extrémité radialement intérieure: elle est mesurée dans la portion courante de l'incision.

### [Fig 5]

### [Fig 6]

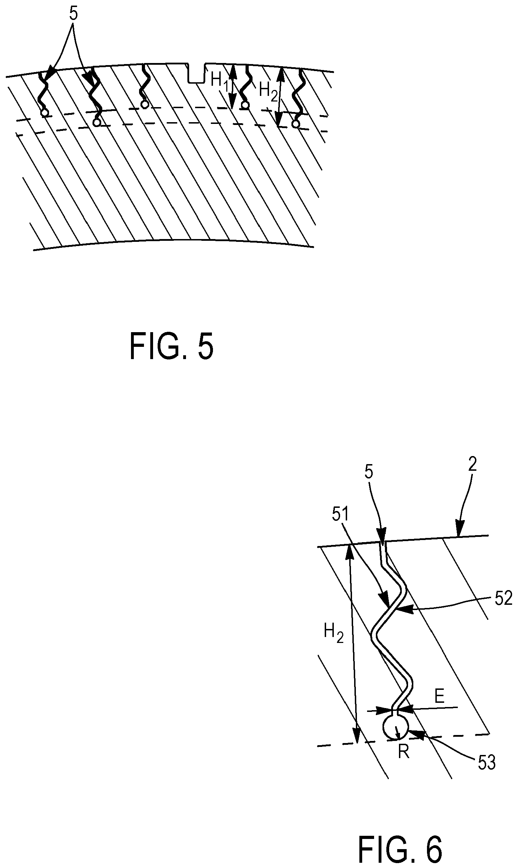

La figure 5 est une vue en coupe, selon un plan longitudinal XZ, d'une bande de roulement selon l'invention comprenant une succession d'incisions transversales avec des profondeurs alternées. Dans le mode de réalisation représenté, les profondeurs H de deux incisions transversales 5 consécutives sont différentes. Plus précisément, la profondeur H prend alternativement deux valeurs distinctes H1 et H2 pour deux incisions transversales 5 consécutives. En outre toute incision transversale 5 a une surface moyenne ondulée selon une direction radiale ZZ'. La figure 6 est une vue de détail en coupe, selon un plan longitudinal XZ, d'une incision transversale ondulée.

### [Fig 7]

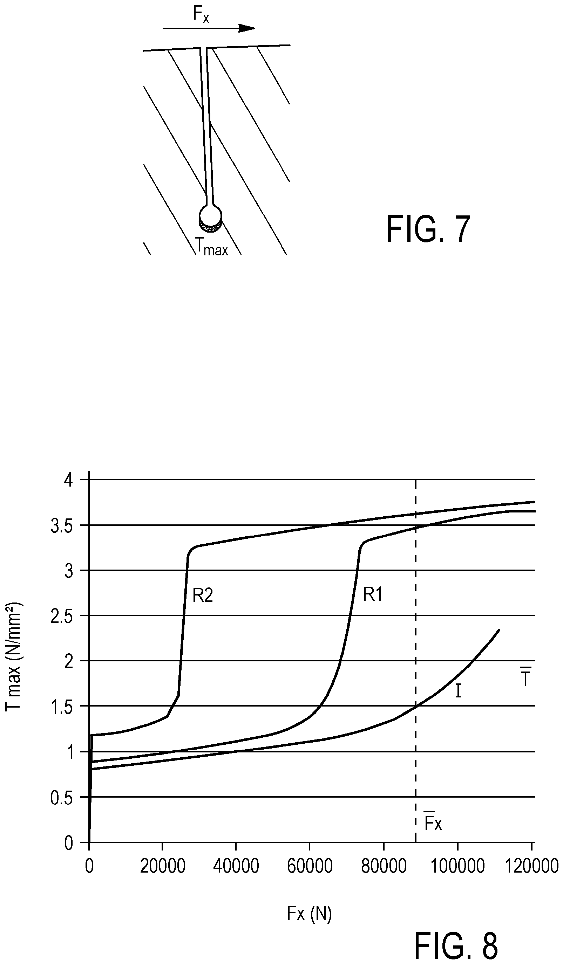

La figure 7 illustre le principe de fonctionnement mécanique d'une incision transversale, sous l'action d'un effort de cisaillement. En roulage, le sol exerce sur la bande de roulement un effort de cisaillement longitudinal Fx au niveau de la surface de roulement, qui génère, au niveau du fond du renflement radialement intérieur de l'incision, une concentration de contraintes caractérisée par un cisaillement maximal Tₘₐₓ.

### [Fig 8]

La figure 8 illustre trois courbes représentant le cisaillement maximal (ou glissement de contrainte) Tₘₐₓ, en fond d'incision, en fonction de l'effort de traction Fx à transmettre par le pneumatique, pour deux bandes de roulement de l'état de la technique R1 et R2 et pour une bande de roulement selon l'invention I. Ces trois courbes sont commentées ci-dessous dans la description des exemples testés par les inventeurs.

Les inventeurs ont plus particulièrement étudié cette invention pour un pneumatique pour dumper dans la dimension 40.00 R 57. Une bande de roulement selon l'invention I a été comparée à deux bandes de roulement de l'état de la technique R1 et R2, ces trois bandes de roulements comprenant toutes des incisions transversales.

Les incisions transversales de chacune de ces bandes de roulement sont caractérisées par leur hauteur radiale H, leur largeur E et ainsi que par leur rayon de fond R. Les bandes de roulement R1 et R2 n'ayant pas de renflement à leur extrémité radialement intérieure, le rayon R caractérise l'arrondi de leur extrémité radialement intérieure et est, par conséquent, égal à la moitié de la largeur E de l'incision. La bande de roulement selon l'invention I ayant, à son extrémité radialement intérieure, un renflement, le rayon R est celui dudit renflement dont le diamètre est, par définition, supérieur à la largeur E de l'incision. En outre, ces incisions transversales sont réparties longitudinalement selon un pas longitudinal B.

Le tableau 1 ci-dessous présente les caractéristiques H, E, R et B, ainsi que le ratio caractéristique (R*B)/(E*H) en résultant :

**[Tableau 1]**

| **Caractéristiques** | **H** | **E** | **R** | **B** | **(R^{∗}B)/(E^{∗}H)** |
|---|---|---|---|---|---|
| R1 | 80 mm | 10 mm | 5 mm | 240 mm | 1.5 |
| R2 | 100 mm | 2 mm | 1 mm | 60 mm | 0.3 |
| I | 80 mm | 2 mm | 5 mm | 70 mm | 2.19 |

Les incisions transversales des bandes de roulement R1 et R2 ont un ratio caractéristique (R*B)/(E*H) respectivement égal à 1.5 et à 0.3, donc inférieur à 1.8. En revanche, les incisions transversales de la bande de roulement I a un ratio caractéristique égal à 2.19, donc supérieur à 1.8, conformément à l'invention.

Il est à noter par ailleurs que, pour la bande de roulement I, le volume total V_{I} des renflements des incisions transversales est égal à 6%, donc inférieur à 10%, du volume total Vc des découpures : ce qui implique que la présence de ces renflements en fond d'incision ne réduit pas de façon significative le volume de gomme à user et donc la durée de vie en usure.

L'invention a été testée pour un pneumatique pour dumper dans la dimension 40.00 R 57, destiné à porter une charge égale à 588600 N, pour une pression de gonflage égale à 6.5 bars, selon la norme ETRTO. Un dumper comprend usuellement deux pneumatiques sur son essieu directeur avant et quatre pneumatiques sur son essieu moteur arrière : l'ensemble du véhicule peut donc porter 6*588600 N= 3531600 N. Dans l'hypothèse d'une pente moyenne égale à 10%, en usage minier, l'effort de traction à transmettre, par l'essieu moteur arrière équipé de 4 roues, est égal à 0.1*3531600 N = 353160 N, soit 353160 N/4= 88290 N pour chaque roue motrice.

Suite à des simulations par calculs par éléments finis, les inventeurs ont estimé que le risque de fissuration en fond d'incision transversale devient élevé au-delà d'un cisaillement maximal Tₘₐₓ égal à 2 N/mm². Les courbes de la figure 8 montrent que, pour les deux bandes de roulement de l'état de la technique R1 et R2, le cisaillement maximal Tₘₐₓ augmente rapidement et fortement au-delà d'une valeur d'effort de traction Fx respectivement sensiblement égale à 20000 N et 60000 N, pour atteindre une valeur égale à 3.5 N/mm² lorsque l'effort de traction Fx atteint la valeur précédemment estimée égale à 88290 N. Par conséquent, pour les bandes de roulement R1 et R2 de l'état de la technique, au niveau de l'effort de traction considéré, le risque de fissuration est élevé puisque le cisaillement maximal est supérieur à 2N/mm². En revanche, dans le cas de la bande de roulement I, pour un effort de traction égal à 88290 N, le cisaillement maximal Tₘₐₓ en fond de renflement d'incision est égal à 1.5 N/mm², donc reste inférieur à 2 N/mm².

## Revendications

1. Bande de roulement (1) de pneumatique pour véhicule lourd de type génie civil destinée à entrer en contact avec un sol par l'intermédiaire d'une surface de roulement (2) comprenant des découpures (3, 4, 5) délimitant des éléments en relief (6),
- les découpures (3, 4, 5) étant, selon une direction longitudinale (XX'), des sillons longitudinaux (3), ou, selon une direction transversale (YY'), des rainures transversales (4) ou des incisions transversales (5), la direction radiale (ZZ') étant une direction selon l'épaisseur de la bande de roulement (2), perpendiculaire à sa surface moyenne, correspondant à une direction perpendiculaire à l'axe de rotation du pneumatique (1),
la direction transversale (YY') étant une direction selon la largeur de la bande de roulement (2), correspondant à la direction parallèle à l'axe de rotation du pneumatique (1),
la direction longitudinale (XX') étant une direction selon la longueur de la bande de roulement (2), correspondant à une direction circonférentielle tangente à la périphérie du pneumatique (1) et perpendiculaire aux directions respectivement radiale (ZZ') et transversale (YY'),
- toute incision transversale (5) étant délimitée par deux parois (51, 52) destinées à entrer en contact l'une avec l'autre lorsque la surface de roulement (2) entre en contact avec un sol au cours du roulage du pneumatique,
- toute incision transversale (5) ayant une profondeur H, mesurée radialement vers l'intérieur à partir de la surface de roulement (2), au plus égale à l'épaisseur radiale H_{T}, et une largeur E, mesurée perpendiculairement aux deux parois (51, 52) délimitant ladite incision transversale (5) et correspondant à la distance minimale entre les deux parois,
- toute incision transversale (5) ayant une extrémité radialement intérieure constituée par un renflement (53) ayant un rayon de fond R,
- les incisions transversales (5) étant réparties longitudinalement selon un pas longitudinal B,
**caractérisée en ce que** la profondeur H, la largeur E de toute incision transversale (5), le rayon de fond R du renflement (53) et le pas longitudinal B vérifient la relation (R*B)/(E*H)>=1.8 et
**en ce que** ladite bande de roulement (1) de pneumatique a une épaisseur radiale HT au moins égale à 60 mm.

2. Bande de roulement (1) selon la revendication 1, **dans laquelle** la largeur E de toute incision transversale (5) est au moins égale à 1 mm et au plus égale à 20% de l'épaisseur radiale H_{T}.

3. Bande de roulement (1) selon l'une des revendications 1 ou 2, **dans laquelle** le rayon de fond R du renflement (53) est au moins égal à 2 fois la largeur E de l'incision transversale (5).

4. Bande de roulement (1) selon l'une quelconque des revendications 1 à 5, **dans laquelle** tout renflement (7) est un cylindre de rayon R.

5. Bande de roulement (1) selon l'une quelconque des revendications 1 à 4, **dans laquelle** les incisions transversales (5) sont réparties longitudinalement selon un pas B, tel que leur profondeur H est au moins égale à 0.5 fois le pas B, de préférence au moins égale au pas B.

6. Bande de roulement (1) selon l'une quelconque des revendications 1 à 5, **dans laquelle** les profondeurs H de deux incisions transversales (5) consécutives sont différentes.

7. Bande de roulement (1) selon la revendication 6, **dans laquelle** la profondeur H prend alternativement deux valeurs distinctes H1 et H2 pour deux incisions transversales (5) consécutives.

8. Bande de roulement (1) selon l'une quelconque des revendications 1 à 7, **dans laquelle** toute incision transversale (5) a une surface moyenne ondulée selon une direction radiale (ZZ') et/ou selon la direction transversale (YY').

9. Bande de roulement (1) selon l'une quelconque des revendications 1 à 8, l'ensemble des découpures (3, 4, 5) ayant un volume total Vc et l'ensemble des renflements des incisions transversales (5) ayant un volume total Vi, **dans laquelle** le volume total V_{I} des renflements des incisions transversales (5) est au plus égal à 10% du volume total Vc des découpures (3, 4, 5).

10. Bande de roulement (1) selon l'une quelconque des revendications 1 à 9, **dans laquelle** la bande de roulement (1) comprend au moins deux sillons longitudinaux (3).

11. Pneumatique pour véhicule lourd de type génie civil comprenant une bande de roulement (1) selon l'une quelconque des revendications 1 à 10.

## Patentansprüche

1. Reifenlaufstreifen (1) für ein Schwerlastfahrzeug vom Baumaschinentyp, welcher dazu bestimmt ist, über eine Lauffläche (2) mit einem Boden in Kontakt zu kommen, und Ausschnitte (3, 4, 5) umfasst, die erhabene Elemente (6) begrenzen,
- wobei die Ausschnitte (3, 4, 5), in einer Längsrichtung (XX'), Längsrillen (3) sind, oder, in einer Querrichtung (YY'), Querrillen (4) oder Quereinschnitte (5) sind, wobei die radiale Richtung (ZZ') eine Richtung entlang der Dicke des Laufstreifens (2) ist, die senkrecht zu dessen mittlerer Fläche ist und einer Richtung entspricht, die zur Drehachse des Reifens (1) senkrecht ist,
wobei die Querrichtung (YY') eine Richtung entlang der Breite des Laufstreifens (2) ist, die einer Richtung entspricht, die zur Drehachse des Reifens (1) parallel ist,
wobei die Längsrichtung (XX') eine Richtung entlang der Länge des Laufstreifens (2) ist, die einer Umfangsrichtung entspricht, die zum Umfang des Reifens (1) tangential und zur radialen Richtung (ZZ') und zur Querrichtung (YY') senkrecht ist,
- wobei jeder Quereinschnitt (5) von zwei Wänden (51, 52) begrenzt wird, die dazu bestimmt sind, miteinander in Kontakt zu kommen, wenn die Lauffläche (2) beim Rollen des Reifens mit einem Boden in Kontakt kommt,
- wobei jeder Quereinschnitt (5) eine von der Lauffläche (2) aus radial in Richtung des Inneren gemessene Tiefe H aufweist, die höchstens gleich der radialen Dicke H_{T} ist, und eine Breite E, die senkrecht zu den zwei Wänden (51, 52), die den Quereinschnitt (5) begrenzen, gemessen wird und dem minimalen Abstand zwischen den zwei Wänden entspricht,
- wobei jeder Quereinschnitt (5) ein radial inneres Ende aufweist, das aus einer Verdickung (53) mit einem Bodenradius R besteht,
- wobei die Quereinschnitte (5) in Längsrichtung gemäß einer Längsteilung B verteilt sind,
**dadurch gekennzeichnet, dass** die Tiefe H und die Breite E jedes Quereinschnitts (5), der Bodenradius R der Verdickung (53) und die Längsteilung B die Beziehung (R*B)/(E*H) ≥ 1,8 erfüllen, und
dadurch, dass der Reifenlaufstreifen (1) eine radiale Dicke H_{T} aufweist, die mindestens gleich 60 mm ist.

2. Laufstreifen (1) nach Anspruch 1, wobei die Breite E jedes Quereinschnitts (5) mindestens gleich 1 mm und höchstens gleich 20 % der eine radialen Dicke H_{T} ist.

3. Laufstreifen (1) nach einem der Ansprüche 1 oder 2, wobei der Bodenradius R der Verdickung (53) mindestens gleich dem 2-Fachen der Breite E des Quereinschnitts (5) ist.

4. Laufstreifen (1) nach einem der Ansprüche 1 bis 3, wobei jede Verdickung (53) ein Zylinder mit dem Radius R ist.

5. Laufstreifen (1) nach einem der Ansprüche 1 bis 4, wobei die Quereinschnitte (5) in Längsrichtung gemäß einer solchen Teilung B verteilt sind, dass ihre Tiefe H mindestens gleich dem 0,5-Fachen der Teilung B und vorzugsweise mindestens gleich der Teilung B ist.

6. Laufstreifen (1) nach einem der Ansprüche 1 bis 5, wobei die Tiefen H von zwei aufeinander folgenden Quereinschnitten (5) verschieden sind.

7. Laufstreifen (1) nach Anspruch 6, wobei die Tiefe H abwechselnd zwei verschiedene Werte H1 und H2 für zwei aufeinander folgende Quereinschnitte (5) annimmt.

8. Laufstreifen (1) nach einem der Ansprüche 1 bis 7, wobei jeder Quereinschnitt (5) eine mittlere Fläche aufweist, die in einer radialen Richtung (ZZ') und/oder in der Querrichtung (YY') gewellt ist.

9. Laufstreifen (1) nach einem der Ansprüche 1 bis 8, wobei die Gesamtheit der Ausschnitte (3, 4, 5) ein Gesamtvolumen V_{C} aufweist und die Gesamtheit der Verdickungen der Quereinschnitte (5) ein Gesamtvolumen V_{I} aufweist, wobei das Gesamtvolumen V_{I} der Verdickungen der Quereinschnitte (5) höchstens gleich 10 % des Gesamtvolumens V_{C} der Ausschnitte (3, 4, 5) ist.

10. Laufstreifen (1) nach einem der Ansprüche 1 bis 9, wobei der Laufstreifen (1) mindestens zwei Längsrillen (3) umfasst.

11. Reifen für ein Schwerlastfahrzeug vom Baumaschinentyp, welcher einen Laufstreifen (1) nach einem der Ansprüche 1 bis 10 umfasst.

## Claims

1. Tyre tread (1) for a heavy-duty vehicle of construction plant type, said tread being intended to come into contact with the ground via a tread surface (2), comprising cuts (3, 4, 5) delimiting elements in relief (6),
- the cuts (3, 4, 5) being, in a longitudinal direction (XX'), longitudinal furrows (3), or, in a transverse direction (YY'), transverse grooves (4) or transverse sipes (5),
- the radial direction (ZZ') being a direction into the thickness of the tread (2), perpendicular to its mean surface, corresponding to a direction perpendicular to the axis of rotation of the tyre (1),
- the transverse direction (YY') being a direction across the width of the tread (2), corresponding to the direction parallel to the axis of rotation of the tyre (1),
- the longitudinal direction (XX') being a direction along the length of the tread (2), corresponding to a circumferential direction tangent to the periphery of the tyre (1) and perpendicular to the respectively radial (ZZ')and transverse directions (YY'),
- each transverse sipe (5) being delimited by two walls (51, 52) intended to come into contact with one another when the tread surface (2) comes into contact with the ground as the tyre runs along,
- each transverse sipe (5) having a depth H, measured radially towards the inside from the tread surface (2), at most equal to the radial thickness H_{T}, and a width E, measured perpendicularly to the two walls (51, 52) delimiting said transverse sipe (5) and corresponding to the minimum distance between the two walls,
- each transverse sipe (5) having a radially inner end made up of a bulge (53) having an end radius R,
- the transverse sipes (5) being distributed longitudinally at a longitudinal spacing B, **characterized in that** the depth H, the width E of each transverse sipe (5), the end radius R of the bulge (53) and the longitudinal spacing B satisfy the relationship (R*B)/(E*H)>= 1.8 and **in that** said tyre tread has a radial thickness H_{T} at least equal to 60 mm.

2. Tread (1) according to Claim 1, **wherein** the width E of each transverse sipe (5) is at least equal to 1 mm and at most equal to 20% of the radial thickness H_{T}.

3. Tread (1) according to either of Claims 1 and 2, **wherein** the end radius R of the bulge (53) is at least equal to 2 times the width E of the transverse sipe (5).

4. Tread (1) according to one of Claims 1 to 3, **wherein** each bulge (7) is a cylinder of radius R.

5. Tread (1) according to any one of Claims 1 to 4, **wherein** the transverse sipes (5) are distributed longitudinally at a spacing B such that their depth H is at least equal to 0.5 times the spacing B, preferably at least equal to the spacing B.

6. Tread (1) according to any one of Claims 1 to 5, **wherein** the depths H of two consecutive transverse sipes (5) are different.

7. Tread (1) according to Claim 6, **wherein** the depth H alternately assumes two different values H1 and H2 for two consecutive transverse sipes (5).

8. Tread (1) according to any one of Claims 1 to 7, **wherein** each transverse sipe (5) has an undulating mean surface in a radial direction (ZZ') and/or in the transverse direction (YY').

9. Tread (1) according to any one of Claims 1 to 8, all of the cuts (3, 4, 5) having a total volume V_{C} and all of the bulges of the transverse sipes (5) having a total volume V_{I}, **wherein** the total volume V_{I} of the bulges of the transverse sipes (5) is at most equal to 10% of the total volume V_{C} of the cuts (3, 4, 5) .

10. Tread (1) according to any one of Claims 1 to 9, **wherein** the tread (1) comprises at least two longitudinal furrows (3).

11. Tyre for a heavy-duty vehicle of construction plant type, comprising a tread (1) according to any one of Claims 1 to 10.
